# EUROPÄISCHE PATENTSCHRIFT

(11) **EP 2 159 485 B1**
(45) Veröffentlichungstag und Bekanntmachung des Hinweises auf die Patenterteilung: **25.01.2012**
(21) Anmeldenummer: 09010568.5
(22) Anmeldetag: 17.08.2009
(51) Int. Cl.: F21V 21/40, F21S 8/00, F21W 131/202, F21W 131/205, F21Y 101/02

(54) **Handgriff für Operationsleuchte**
Handle for operation lamp
Poignée pour lampe d'opération

(30) Priorität: 26.08.2008 DE 102008039772
(43) Veröffentlichungstag der Anmeldung: 03.03.2010
(73) Patentinhaber: Berchtold Holding GmbH, 78532 Tuttlingen (DE)
(72) Erfinder: Klaus, Peter, 78576 Emmingen-Liptingen (DE); Winkler, Martin, 78333 Stockach (DE)
(74) Vertreter: Manitz, Finsterwald & Partner GbR

(56) Entgegenhaltungen:
- EP-A1- 1 722 156
- EP-A1- 2 065 634
- WO-A2-99/50593
- DE-A1- 19 903 830
- DE-A1-102004 055 839

## Beschreibung

Die vorliegende Erfindung betrifft eine medizinische Leuchte nach dem Oberbegriff des Anspruchs 1. Eine derartige Leuchte ist aus DE 102004055839 A1 bekannt.

Handgriffe für Leuchten der vorstehend beschriebenen Art sind aus dem Stand der Technik bekannt und dienen dazu, die Größe des Leuchtfeldes der Operationsleuchte zu variieren. Bei bekannten Operationsleuchten wird die Drehung des Handgriffs mechanisch so umgesetzt, dass ein sich innerhalb der Operationsleuchte befindliches Leuchtmittel axial verschiebt.

Es ist die Aufgabe der vorliegenden Erfindung, einen Handgriff der eingangs genannten Art zu schaffen, der kostengünstig herstellbar ist, und mit dem eine vereinfachte Verstellung des Leuchtfeldes erfolgen kann.

Die Lösung dieser Aufgabe erfolgt durch die Merkmale des Anspruchs 1.

Mit dem erfindungsgemäßen Handgriff wird somit nur ermittelt, ob eine der Endlagen erreicht ist, d.h. es wird nicht die gesamte Drehbewegung des Handgriffs zur Leuchtfeldverstellung detektiert. Dies besitzt den Vorteil, dass bei einer manuellen Umpositionierung der Operationsleuchte nicht versehentlich das Leuchtfeld verändert wird, wenn dies gar nicht gewünscht ist. Erst wenn der Handgriff in eine der Endlagen bewegt worden ist, gibt der elektrische Sensor ein Signal ab, so dass eine Leuchtfeldverstellung initiiert werden kann.

Vorteilhafte Ausführungsformen der Erfindung sind in der Beschreibung, der Zeichnung sowie den Unteransprüchen beschrieben.

Nach einer ersten vorteilhaften Ausführungsform kann der Sensor ein Kraftsensor sein. Hierdurch ergibt sich die weitere Möglichkeit, die Verstellung des Leuchtfelds in Abhängigkeit von der Zeit und/oder der Dauer der aufgebrachten Kraft zu variieren, um dadurch beispielsweise einen Eilgang zu realisieren.

Nach einer weiteren vorteilhaften Ausführungsform können zwei Sensoren vorgesehen sein, wobei der Griffteil durch ein Federmittel in eine Ruhelage zwischen den beiden Endlagen vorgespannt ist. Auf diese Weise kann detektiert werden, wenn sich der Griffteil in der einen oder der anderen Endlage befindet, wenn dieser verdreht worden ist.

Nach einer weiteren vorteilhaften Ausführungsform ist das Leuchtfeld der Operationsleuchte veränderbar, indem einzelne Leuchtmittel der Operationsleuchte in ihrer Helligkeit verändert werden. Eine solche Ausführungsform kann besonders bei Operationsleuchten mit LEDs als Leuchtmittel vorteilhaft sein.

Nach einer weiteren vorteilhaften Ausführungsform kann der Sensor so ausgebildet sein, dass dieser ein Sensorsignal liefert, das in Abhängigkeit von der aufgebrachten Kraft veränderbar ist. In diesem Fall kann die Steuerung die Geschwindigkeit, mit der das Leuchtfeld verändert wird, in Abhängigkeit von der Amplitude des Sensorsignals variieren. Es versteht sich, dass das Sensorsignal nicht notwendigerweise ein analoges Signal sein muss sondern auch ein digitales Signal sein kann.

Nach einer weiteren vorteilhaften Ausführungsform kann die Steuerung nach Unterschreiten eines minimalen und/oder nach Überschreiten eines maximalen Sensorsignals keine Veränderung des Leuchtfeldes auslösen. Bei dieser Ausführungsform ist besonders gut sichergestellt, dass keine versehentliche Verstellung des Leuchtfeldes erfolgt, da das Sensorsignal innerhalb eines Arbeitsbereiches liegen muss, der durch das minimale und das maximale Sensorsignal definiert ist. Hierbei kann es vorteilhaft sein, die Dynamik der Bewegung des Handgriffs zu ermitteln, so dass die Steuerung beispielsweise keine Veränderung des Leuchtfeldes auslöst, wenn ein vorbestimmter Amplitudenbereich des Sensorsignals innerhalb einer vorbestimmten Mindestzeit durchschritten wurde. In diesem Fall ist nämlich anzunehmen, dass die Operationsleuchte umpositioniert wird und keine Leuchtfeldverstellung erforderlich ist.

Nach einer weiteren vorteilhaften Ausführungsform kann die Steuerung mehrere aufeinander folgende Amplitudenbereiche für das Sensorsignal festlegen, wobei in jedem Amplitudenbereich eine Lichtfeldveränderung mit einer unterschiedlichen Geschwindigkeit ausgelöst wird, was den Bedienkomfort erhöht.

Nach einer weiteren vorteilhaften Ausführungsform kann der Griffteil mit einem Schwenkhebel in Verbindung stehen, der den Sensor über ein Dämpfungselement beaufschlagt. Dies trägt einerseits zu einer erhöhten Lebensdauer und andererseits wiederum zu einem verbesserten Bedienkomfort bei.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: einen Längsschnitt durch einen Handgriff;
- Fig. 2: eine vergrößerte Draufsicht auf einen Teil des Hand- griffs von Fig. 1;
- Fig. 3: eine Explosionszeichnung der Anordnung von Fig. 2; und
- Fig. 4: eine Kennlinie des elektrischen Sensors.

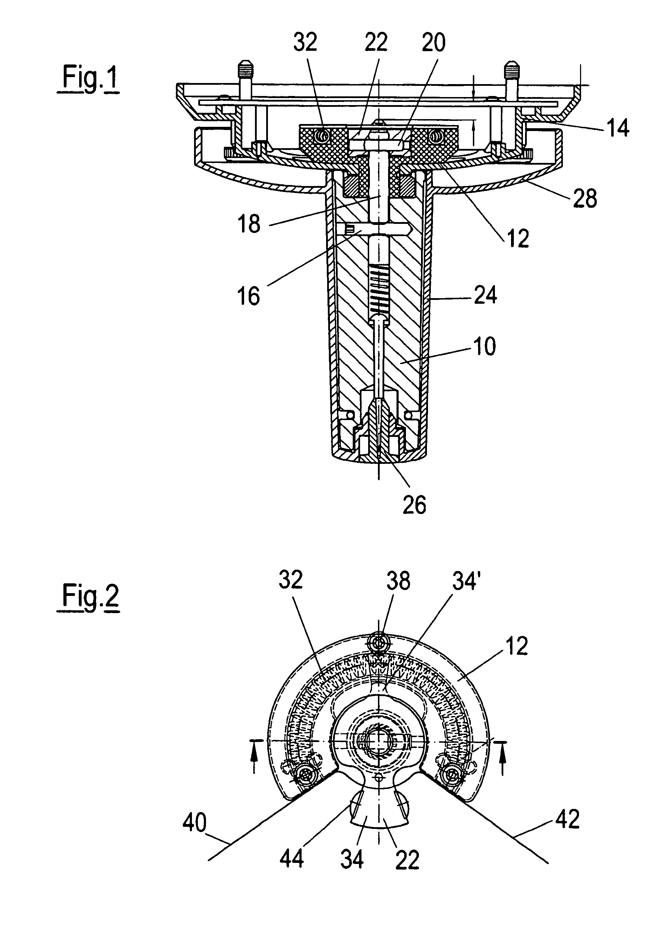

Fig. 1 zeigt eine Schnittansicht eines Handgriffs für eine (nicht dargestellte) Operationsleuchte, bei der durch Verdrehen des Handgriffs das Leuchtfeld veränderbar ist, beispielsweise indem der Fokus eines Leuchtmittels mechanisch verändert wird, oder indem einzelne Leuchtmittel in ihrer Helligkeit verändert werden.

Der Handgriff umfasst einen zwischen zwei Endlagen drehbar gelagerten Griffteil 10, der um etwa 70° um seine Längsachse verschwenkbar ist, wobei der Griffteil 10 mit einer Halterung 12 in Verbindung steht, die über eine Befestigungsschale 14 an der Operationsleuchte montierbar ist. Wie die Figur zeigt, ist der Griffteil 10 über einen Splint 16 mit einer Kupplungswelle 18 verbunden, die durch die Halterung 12 hindurchgeführt ist und über einen Splint 20 drehfest mit einem Schwenkhebel 22 verbunden ist, der innerhalb der Halterung 12 drehbar aufgenommen ist.

Das Bezugszeichen 24 in Fig. 1 bezeichnet eine sterilisierbare Griffhülse, die auf den Griffteil 10 aufgeschoben und mit Hilfe eines Stifts 26 an dem Griffteil 10 gehalten ist. Hierbei ist an die Griffhülse 24 ein kuppelartiges Endteil 28 angeformt, das die Befestigungsschale 14 nahezu vollständig abdeckt.

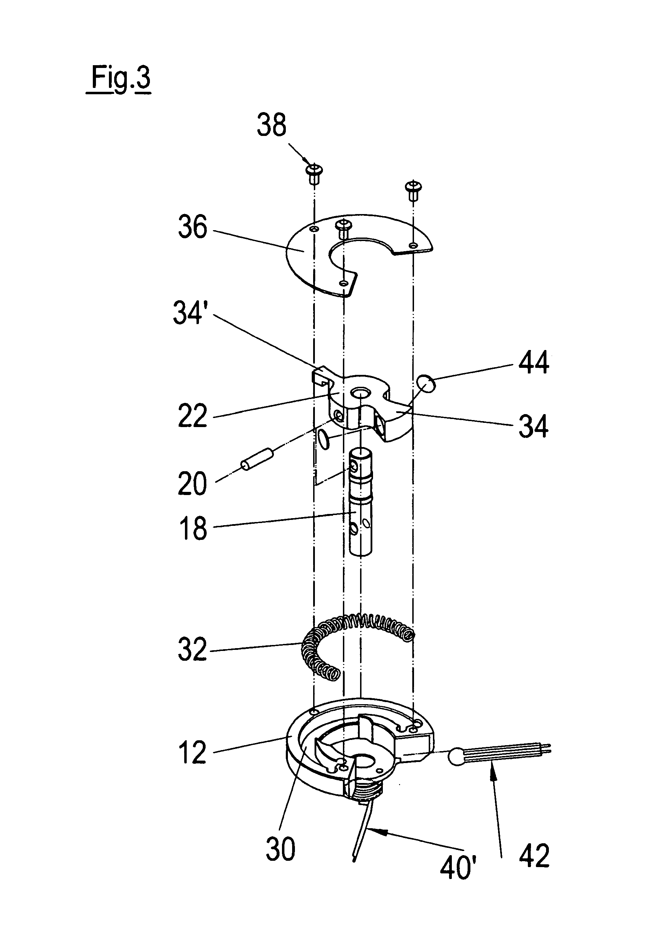

Fig. 3 zeigt eine Explosionsdarstellung des Zusammenbaus von Halterung 12 und Schwenkhebel 22. Wie zu erkennen ist, befindet sich in der Halterung 12 eine Ringnut 30, die sich über etwa 220° erstreckt und in die eine Spiralfeder 32 eingelegt ist. Der innerhalb der Halterung 12 drehbar gelagerte Schwenkhebel 22 weist einen vorderen Schaltbacken 34 sowie einen diametral gegenüberliegenden hinteren Fortsatz 34' auf, der im montierten Zustand mit der Feder 32 verhakt ist (vgl. Fig. 2). Hierdurch lässt sich der Schwenkhebel 22 innerhalb der Halterung 12 um seine Mittelachse und gegen die Kraft der Feder 32 verdrehen und der Schwenkhebel 22 kehrt ohne äußere Krafteinwirkung stets in seine in Fig. 2 dargestellte Mittellage zurück. Zur Fixierung der Feder 32 innerhalb der Halterung 12 ist eine Abdeckung 36 vorgesehen, die über drei Schrauben 38 mit der Halterung 12 verbunden werden kann.

Wie die Fig. 2 und 3 ferner zeigen, sind an der Halterung 12 zwei elektrische Kraftsensoren 40 und 42 vorgesehen, die jeweils an einer stirnseitigen Fläche der Halterung 12 verklebt sind und die ein Anschlagen des Schaltbackens 34 detektieren. Im Bereich der Anschlagfläche sind an dem Schaltbacken 34 zwei linsenförmige Dämpfungselemente 44 vorgesehen.

Wie aus der vorstehenden Beschreibung hervorgeht, lässt sich der Griffteil 10 um seine Mittelachse aus seiner Mittelstellung nach links oder nach rechts verdrehen, wobei bei einer solchen Verdrehung der Schwenkhebel 22 ebenfalls verdreht wird. Wenn der Schwenkhebel 22 eine seiner Endlagen erreicht hat, schlägt dieser an einem der Sensoren 40 und 42 an und übt auf den jeweiligen Sensor eine Kraft aus, so dass der Sensor ein in Abhängigkeit von der ausgeübten Kraft sich veränderndes Signal abgibt. In Abhängigkeit von dem abgegebenen Signal wird dann das Leuchtfeld der Operationsleuchte verändert, wozu eine (nicht dargestellte) Steuerung vorgesehen ist, die nachfolgend näher beschrieben wird.

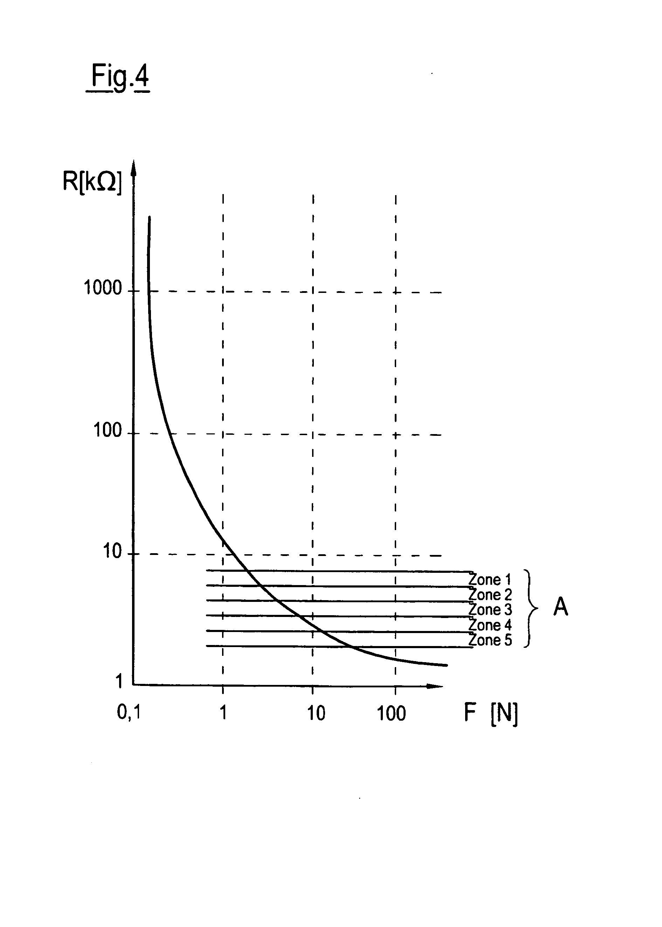

Die Sensoren 40 und 42 sind wie vorstehend beschrieben als Kraftsensoren ausgebildet, so dass durch Ausüben eines Drehmoments auf den Griffteil 10 und bei Erreichen einer Endlage der jeweilige Sensor mit einer Kraft beaufschlagt wird, die dessen Widerstand verändert. Die Steuerung überwacht den Widerstandswert jedes Sensors mehrmals pro Sekunde und wertet diesen aus. Für die Auswertung wird auf der Kennlinie des Sensors, wie sie beispielhaft in Fig. 4 dargestellt ist, ein aus mehreren Zonen (Zone 1 bis Zone 5) gebildeter Arbeitsbereich A definiert. Jede Zone entspricht einem Widerstandsbereich, wobei die einzelnen Zonen gleich groß sind und aufeinander folgen. Für jede Zone kann in der Steuerung eine bestimmte Aktion hinterlegt sein.

Für die Verstellung des Leuchtfeldes der Operationsleuchte ist jeder Zone eine bestimmte Geschwindigkeit zugeordnet, mit der das Leuchtfeld verändert wird. Zone 1 steht hierbei für die geringste Geschwindigkeit und Zone 5 für die höchste Geschwindigkeit, mit der das Leuchtfeld verändert wird.

Wenn die Operationsleuchte mit Hilfe des Handgriffs umpositioniert wird, so wird die Kennlinie aufgrund der relativ hohen aufgebrachten Kraft mit sehr hoher Geschwindigkeit durchlaufen. Um in diesem Fall ein unerwünschtes Verstellen der Leuchtfeldgröße zu verhindern, startet in der Steuerung eine Zeitverzögerung bei jedem ersten Eintreten des Widerstandswerts in den Arbeitsbereich A. Erst nach Ablauf der voreinstellbaren Verzögerung wird eine Leuchtfeldverstellung ausgelöst, wenn sich der momentane Widerstandswert immer noch innerhalb des Arbeitsbereiches A befindet.

Wie vorstehend beschrieben wurde, kann durch Verdrehen des Griffteils 10 im oder entgegen dem Uhrzeigersinn über einen definierten Auslösewinkel eine dynamische Leuchtfeldvergrößerung oder -verkleinerung erzielt werden, da über die Dauer der Betätigung des Endanschlags die zeitliche Dauer der Leuchtfeldverstellung und über die Intensität der Betätigung die Geschwindigkeit der Leuchtfeldverstellung festgelegt wird. Bei Umpositionieren der Operationsleuchte mit Hilfe des Handgriffs wird über die vorstehend beschriebene Kennliniensteuerung ein ungewünschtes Verstellen des Leuchtfeldes vermieden. Nach Betätigung der Leuchtfeldverstellung wird durch Loslassen des Handgriffs dieser automatisch in seine Mittelstellung gebracht, so dass stets eine definierte Ausgangslage vorhanden ist.

### Bezugszeichenliste

- 10: Griffteil
- 12: Halterung
- 14: Befestigungsschale
- 16: Splint
- 18: Kupplungswelle
- 20: Splint
- 22: Schwenkhebel
- 24: Griffhülse
- 26: Stift
- 28: Endteil
- 30: Ringnut
- 32: Feder
- 34: Schaltbacken
- 34': Fortsatz
- 36: Abdeckung
- 38: Schrauben
- 40,42: Sensor
- 44: Dämpfungselemente

- A: Arbeitsbereich

## Patentansprüche

1. Medizinische Leuchte mit einem Handgriff, mit dem durch Verdrehen ein Leuchtfeld der Leuchte veränderbar ist, umfassend einen zwischen zwei Endlagen drehbar gelagerten Griffteil (10) und zumindest einen elektrischen Sensor (40, 42), der detektiert, wenn der Griffteil (10) eine der Endlagen erreicht hat, wobei der Sensor (40, 42) mit einer elektrischen Steuerung in Verbindung steht, mit der das Leuchtfeld der Operationsleuchte veränderbar ist, **dadurch gekennzeichnet, dass**
eine Veränderung des Leuchtfelds erst dann initiiert wird, wenn der Griffteil in eine der Endlagen bewegt worden ist.

2. Leuchte nach Anspruch 1,
**dadurch gekennzeichnet, dass**
der Sensor (40, 42) ein Kraftsensor ist.

3. Leuchte nach Anspruch 1 oder 2,
**dadurch gekennzeichnet, dass**
zwei Sensoren (40, 42) vorgesehen sind, und dass der Griffteil (10) durch ein Federmittel (32) in eine Ruhelage zwischen den beiden Endlagen vorgespannt ist.

4. Leuchte nach zumindest einem der vorstehenden Ansprüche,
**dadurch gekennzeichnet, dass**
eine Veränderung des Leuchtfelds durch Dimmen einzelner Leuchtmittel erfolgt.

5. Leuchte nach Anspruch 1,
**dadurch gekennzeichnet, dass**
der Sensor (40, 42) ein in Abhängigkeit von der aufgebrachten Kraft veränderbares Sensorsignal liefert und dass die Steuerung die Geschwindigkeit, mit der das Leuchtfeld verändert wird, in Abhängigkeit von der Amplitude des Sensorsignals variiert.

6. Leuchte nach zumindest einem der vorstehenden Ansprüche 1 bis 5,
**dadurch gekennzeichnet, dass**
die Steuerung nach Unterschreiten eines minimalen und/oder nach Überschreiten eines maximalen Sensorsignals keine Veränderung des Leuchtfeldes auslöst.

7. Leuchte nach zumindest einem der vorstehenden Ansprüche 1 bis 6,
**dadurch gekennzeichnet, dass**
die Steuerung keine Veränderung des Leuchtfeldes auslöst, wenn ein vorbestimmter Amplitudenbereich des Sensorsignals innerhalb einer vorbestimmten Mindestzeit durchschritten wurde.

8. Leuchte nach zumindest einem der vorstehenden Ansprüche 1 bis 7,
**dadurch gekennzeichnet, dass**
die Steuerung mehrere aufeinander folgende Amplitudenbereiche des Sensorsignals festlegt, wobei in jedem Amplitudenbereich eine Lichtfeldveränderung mit einer unterschiedlichen Geschwindigkeit ausgelöst wird.

9. Leuchte nach Anspruch 8,
**dadurch gekennzeichnet, dass**
sich die Geschwindigkeit mit jedem aufeinander folgenden Amplitudenbereich erhöht.

10. Leuchte nach zumindest einem der vorstehenden Ansprüche, **dadurch gekennzeichnet, dass**
mit dem Griffteil (10) ein Schwenkhebel (22) in Verbindung steht, der den Sensor (40, 42) über ein Dämpfungselement (44) beaufschlagt.

## Claims

1. A medical lamp having a handle with which an illuminated field of the lamp can be changed by rotation, comprising a grip part (10) rotatably supported between two end positions and at least one electric sensor (40, 42) which detects when the grip part (10) has reached one of the end positions, wherein the sensor (40, 42) is connected to an electrical control with which the illuminated field of the surgical lamp can be changed,
**characterised in that**
a change of the illuminated field is only initiated when the grip part has been moved into one of the end positions.

2. A lamp in accordance with claim 1,
**characterised in that**
the sensor (40, 42) is a force sensor.

3. A lamp in accordance with claim 1 or claim 2,
**characterised in that**
two sensors (40, 42) are provided; and **in that** the grip part (10) is pre-tensioned by a spring means (32) into a position of rest between the two end positions.

4. A lamp in accordance with at least one of the preceding claims, **characterised in that**
a change of the illuminated field takes place by dimming of individual light sources.

5. A lamp in accordance with claim 1,
**characterised in that**
the sensor (40, 42) delivers a signal changeable in dependence on the force applied; and **in that** the control varies the speed at which the illuminated field is changed in dependence on the amplitude of the sensor signal.

6. A lamp in accordance with at least one of the preceding claims, 1 to 5,
**characterised in that**
the control does not trigger any change of the illuminated field after a falling below of a minimal sensor signal and/or after exceeding a maximum sensor signal.

7. A lamp in accordance with at least one of the preceding claims, 1 to 6,
**characterised in that**
the control does not trigger any change of the illuminated field when a predetermined amplitude range of the sensor signal was passed through within a predetermined minimum time.

8. A lamp in accordance with at least one of the preceding claims, 1 to 7,
**characterised in that**
the control fixes a plurality of sequential amplitude ranges of the sensor signal, with an illuminated field change being triggered at a different speed in each amplitude range.

9. A lamp in accordance with claim 8,
**characterised in that**
the speed is increased with each sequential amplitude range.

10. A lamp in accordance with at least one of the preceding claims, **characterised in that**
a pivot lever (22) which acts on the sensor (40, 42) via a damping element (44) is connected to the grip part (10).

## Revendications

1. Lampe médicale comprenant une poignée avec laquelle un champ d'éclairage de la lampe est variable par rotation, comprenant une partie de poignée (10) capable de rotation entre deux positions terminales, et au moins un capteur électrique (40, 42) qui détecte quand la partie de poignée (10) a atteint l'une des positions terminales, le capteur (40, 42) étant connecté à une commande électrique au moyen de laquelle le champ d'éclairage de la lampe d'opérations peut être varié, **caractérisée en ce qu'**une variation du champ d'éclairage est démarrée uniquement quand la partie de poignée a été déplacée jusque dans l'une des positions terminales.

2. Lampe selon la revendication 1,
**caractérisée en ce que** le capteur (40, 42) et un capteur de force.

3. Lampe selon la revendication 1 ou 2,
**caractérisée en ce qu'**il est prévu deux capteurs (40, 42), et **en ce que** la partie de poignée (10) est précontrainte par un organe à ressort (32) jusque dans une position de repos entre les deux positions terminales.

4. Lampe selon l'une au moins des revendications précédentes, **caractérisée en ce qu'**une variation du champ d'éclairage a lieu par gradation d'organes d'éclairage individuels.

5. Lampe selon la revendication 1,
**caractérisée en ce que** le capteur (40, 42) délivre un signal de capteur variable en fonction de la force appliquée, et **en ce que** la commande fait varier la vitesse avec laquelle le champ d'éclairage est varié, en fonction de l'amplitude du signal de capteur.

6. Lampe selon l'une au moins des revendications précédentes 1 à 5, **caractérisée en ce que** la commande ne déclenche aucune variation du champ d'éclairage lorsque le signal de capteur passe au-dessous d'une valeur minimale et/ou au-dessus d'une valeur maximale.

7. Lampe selon l'une au moins des revendications précédentes 1 à 6, **caractérisée en ce que** la commande ne déclenche aucune variation du champ d'éclairage si une plage d'amplitude prédéterminée du signal de capteur a été traversée à l'intérieur d'un temps minimum prédéterminé.

8. Lampe selon l'une au moins des revendications précédentes 1 à 7, **caractérisée ce que** la commande détermine des plages d'amplitude mutuellement successives du signal de capteur, et dans chaque plage d'amplitude une variation du champ d'éclairage est déclenchée avec une vitesse différente.

9. Lampe selon la revendication 8,
**caractérisée en ce que** la vitesse augmente avec chaque plage d'amplitude mutuellement successive.

10. Lampe selon l'une au moins des revendications précédentes, **caractérisée en ce qu'**un levier pivotant (22), qui attaque le capteur (40, 42) via un élément amortisseur (44), est relié à la partie de poignée (10).
